# EUROPEAN PATENT APPLICATION

(11) **EP 2 234 060 A1**
(43) Date of publication of application: **29.09.2010**
(21) Application number: 08858617.7
(22) Date of filing: 11.12.2008
(51) Int. Cl.: G06Q 50/00, B60L 11/18, G01R 22/00

(54) **ELECTRIC POWER CALCULATION DEVICE, PRICE CALCULATION DEVICE FOR CALCULATING PRICE OF CONSUMED ELECTRIC POWER AND PRICE CALCULATION METHOD, VEHICLE INFORMATION OUTPUT DEVICE AND INFORMATION OUTPUT METHOD**

(30) Priority: 13.12.2007 JP 2007322335
(71) Applicant: Toyota Jidosha Kabushiki Kaisha, Toyota-shi, Aichi 471-8571 (JP)
(72) Inventor: YAMAMOTO, Shigeo, Toyota-shi Aichi 471-8571 (JP)
(74) Representative: TBK-Patent
(86) International application number: PCT/JP2008/072479
(87) International publication number: WO 2009/075313

(57) **Abstract**

In order to accurately calculate a price for electric power for a vehicle to travel, to be spent for upgrade and maintenance of the social infrastructure necessary for vehicles to travel, an ECU determines whether battery-charging electric energy data is stored in an internal memory (S256), calculates, when the battery-charging electric energy data is stored (YES in S256), an extra price which is separate from a basic usage price for the electric power and imposed on a user having used the electric power for traveling the vehicle, based on the battery-charging electric power data (S258), corrects the extra price based on information about a plug-in vehicle (information about whether the electric vehicle is hybrid vehicle for example) (S260), and generates price data in which the price is stratified into a basic usage price for electric power and an extra price (S262).

## Description

Electric Energy Calculation Device, Price Calculation Device and Price Calculation Method for Calculating Price for Consumed Electric Power, and Vehicle Information Output Device and Vehicle Information Output Method

### TECHNICAL FIELD

The present invention relates to calculation of an electric energy supplied to a vehicle for use as energy for traveling, and calculation of a price for the supplied electric energy.

### BACKGROUND ART

In these years, for the sake of environmental protection and convenient use, efforts are being devoted to development of electric vehicles and hybrid vehicles each mounted with a battery for traveling that can be supplied with electric power from a household power supply of a residential house. Japanese Patent Laying-Open No. 2001-8380 for example discloses a technology of managing the electric power for a vehicle such as those as described above having a power storage device which is used for driving the vehicle and which can be charged from a power supply external to the vehicle (hereinafter also referred to as plug-in vehicle), and also managing the electric power for a household power supply of a residential house.

The electric power management system disclosed in Japanese Patent Laying-Open No. 2001-8380 has, on the house side, a charging and discharging unit connected to an electric power line which supplies external system electric power to a home load, and a main controller for performing general control, so that electric power can be transmitted via the charging and discharging unit to/from a battery mounted on an electric vehicle from/to the house. The electric power management system includes a battery controller for monitoring the state of the battery and managing charging and discharging, a detection unit for detecting connection between the charging and discharging unit and the battery, and a saved electric energy calculation unit for determining an electric energy to be saved in the battery for normal use of the electric vehicle. When electric power is supplied from the battery to the house, the main controller restricts the supplied electric energy to an amount determined by subtracting the saved electric energy from the remaining capacity of the battery, at least as long as the system electric power is normal.

The electric power management system disclosed in Japanese Patent Laying-Open No. 2001-8380 saves, in the battery, the electric energy necessary for normal use of the electric vehicle, namely necessary for traveling to and back from a destination in a daily activity area of the user, and then supplies electric power from the electric vehicle to the house. Therefore, the electric vehicle can be driven even for an urgent and unscheduled business, while the electric power of the electric vehicle can be used for a home load without care. Moreover, because the battery is not completely discharged, performance degradation such as sudden increase in internal resistance of the battery or sudden decrease in battery capacity is prevented and thus the battery life is improved.
Patent Document 1: Japanese Patent Laying-Open No. 2001-8380

### DISCLOSURE OF THE INVENTION

### PROBLEMS TO BE SOLVED BY THE INVENTION

In order for vehicles to travel, upgrade and maintenance of the social infrastructure such as road construction, maintenance, and management, is necessary, which requires financial resources. Such financial resources include taxes imposed on the traveling energy corresponding to the amount of travel on the road. A representative one of such taxes is so-called gasoline tax. The gasoline tax is a part of a purchase price of gasoline, and thus collected from the user when the user purchases the gasoline. Future widespread use of the plug-in vehicles will be accompanied by the necessity to impose a tax corresponding to the gasoline tax on the electric power supplied to the plug-in vehicles. How the tax should be calculated and collected, however, has not been sufficiently discussed.

The present invention has been made to solve the above-described problems, and an object of the invention is to provide an electric energy calculation device, a price calculation device, a price calculation method, a vehicle information output device, and a vehicle information output method with which an electric energy used as an energy for a vehicle to travel as well as a price for the electric energy can be calculated.

### MEANS FOR SOLVING THE PROBLEMS

An electric energy calculation device according to the present invention is an electric energy calculation device for calculating an electric energy of an electric power system capable of supplying electric power to an electric vehicle and to an electrical appliance other than the electric vehicle, and includes: a supply unit for distributing electric power of the electric power system among the electric vehicle and the electrical appliance; and a calculation unit for calculating an electric energy supplied from the electric power system to the electric vehicle, independently of an electric energy supplied from the electric power system to the electrical appliance.

According to the present invention, the calculation unit calculates the electric energy supplied from the electric power system to the electric vehicle independently of the electric energy supplied from the electric power system to the electrical appliance other than the electric vehicle. Here, the calculation unit may be implemented by software mainly configured with a program executed on a processor or the like, or hardware mainly configured to count the consumed electric energy without resetting the count, like a commonly used electric energy meter. In this way, even in the case where electric power is supplied to the electric vehicle from the electric power system (household power supply for example), which also supplies electric power to electrical appliances other than the electric vehicle, the electric energy supplied from the electric power system to the electric vehicle can be appropriately calculated.

An electric energy calculation device according to another aspect of the present invention calculates an electric energy of an electric power system distributing electric power among an electric vehicle and an electrical appliance other than the electric vehicle. The electric energy calculation device includes: a first storage unit for storing a first electric energy supplied from the electric power system to the electrical appliance; and a second storage unit for storing a second electric energy supplied from the electric power system to the electric vehicle, independently of the first electric energy.

According to the present invention, the electric energy supplied from the electric power system to the electrical appliance other than the electric vehicle, and the electric energy supplied from the electric power system to the electric vehicle are stored separately in the first storage unit and the second storage unit, respectively. Here, the first storage unit and the second storage unit may be provided at a place (home for example) where the electric vehicle is charged from the electric power system, or provided at an electric power company which manages the electric power system. In this way, even when the electric power is supplied to the electric vehicle from the electric power system (household power supply for example) which also supplies electric power to electrical appliances other than the electric vehicle, the price for the electric energy supplied to the electric vehicle and the price for the electric energy supplied to the electrical appliances other than the electric vehicle can be calculated separately.

A price calculation device according to still another aspect of the present invention calculates a price for consumed electric power. The price calculation device includes: a determination unit for determining whether the consumed electric power is electric power with which a power storage device for driving a vehicle is charged; a calculation unit for calculating an electric energy corresponding to the electric power with which the power storage device is charged as determined by the determination unit; and an extra price calculation unit for calculating a charging electric energy by summing the calculated electric energy and, based on the calculated charging electric energy, calculating an extra price separate from a basic usage price for an electric energy.

According to the present invention, it is determined whether the consumed electric power is electric power with which the power storage device for driving a vehicle is charged (namely electric power used as energy for the vehicle to travel). The electric energy corresponding to the electric power with which the power storage device is charged, as determined, is summed to calculate the charging electric energy. Based on the charging electric energy, an extra price which is separate from a basic usage price for the electric energy is calculated. The extra price here may be any as long as it is imposed on the user or owner of the vehicle by a third party (including natural person and legal person such as nation and company). The third party in this case also includes any party other than the energy supplier (such as electric power company). The charged price includes any price other than the cost for energy. The purpose of price charging of this type includes use of it for upgrade and maintenance of the social infrastructure, for a fee for emission of carbon dioxide from a power station or the like, and for development of future vehicles, for example. The purpose and use of the price charging are not limited to the above-exemplified ones. This is the same for the extra price described below. In this way, the extra price can be calculated based on only the electric energy consumed as energy for the vehicle to travel, which is a part of the total consumed electric energy. Therefore, even in the case where the power storage device for driving the vehicle is charged by an external power supply (household power supply for example), which also supplies electric power to an electrical load other than the vehicle, the extra price can be calculated accurately. Accordingly, the price calculation device and the price calculation method can be provided that can accurately calculate the extra price for the electric power consumed as energy for the vehicle to travel.

Preferably, the price calculation device further includes an acquisition unit for acquiring information about the vehicle. The extra price calculation unit calculates the extra price based on the information about the vehicle in addition to the charging electric energy.

According to the present invention, information about the vehicle is acquired, and the extra price is calculated based on the acquired information about the vehicle in addition to the charging electric energy. In this way, in the case for example where an extra price per unit energy is different depending on whether the vehicle is a vehicle traveling with electric power only (electric vehicle for example) or a vehicle traveling with energy other than electric power in addition to electric power (hybrid vehicle for example), the information for identifying whether the vehicle supplied with electric power is electric vehicle or hybrid vehicle can be acquired as the information about the vehicle, and thus the extra price can be calculated accurately.

More preferably, the information about the vehicle is information for identifying whether the vehicle is a first vehicle traveling with only the electric power with which the power storage device is charged, or a second vehicle traveling with an energy other than the electric power with which the power storage device is charged, in addition to the electric power with which the power storage device is charged. The extra price calculation unit calculates an extra price for a charging electric energy of the first vehicle and an extra price for a charging electric energy of the second vehicle, in respective manners different from each other.

According to the present invention, the extra price is calculated differently depending on whether the vehicle is the first vehicle (electric vehicle for example) traveling with only the electric power with which the power storage device is charged, or the second vehicle (hybrid vehicle for example) traveling with an energy other than the electric power with which the power storage device is charged, in addition to the electric power with which the power storage device is charged. In this way, even in the case where the extra price per unit energy is different depending on whether the vehicle is the first vehicle or the second vehicle, the extra price can be calculated accurately.

Still more preferably, the information about the vehicle is at least one of information about a travel distance of the vehicle and information about an electric energy consumed by the vehicle. The extra price calculation unit calculates the extra price in a manner that the extra price is higher as the travel distance is longer or as the consumed electric energy is larger.

According to the present invention, at least one of the information about the travel distance of the vehicle and the information about the electric energy consumed by the vehicle is acquired as information about the vehicle. The extra price is calculated so that the extra price is higher as the travel distance is longer or as the consumed electric energy is larger. The extra price can thus be calculated accurately in accordance with the amount of travel on the road.

Still more preferably, the price calculation device further includes a generation unit for generating data for separately outputting the basic usage price and the extra price.

According to the present invention, data is generated for separately outputting the basic usage price and the extra price. Thus, the generated data can be used to improve the convenience in payment or collection of the extra price. For example, the generated data may be used to separately display or print the basic usage price and the extra price, and therefore, the payer of the extra price and the collector of the extra price can see and check the extra price. Further, even in the case where the collector of the basic usage price and the collector of the extra price are different, the generated data may be transmitted respectively to the collectors. In this way, the extra price can be collected in any of various ways, for example, the basic usage price and the extra price may be collected separately.

Still more preferably, the price calculation device is provided within a building having a power supply for supplying electric power to the power storage device.

According to the present invention, the extra price can be calculated within a building having a power supply that supplies electric power to the power storage device. Therefore, the extra price can be calculated without providing a price calculation device for each vehicle.

Still more preferably, the price calculation device is provided at a vehicle capable of communicating with a power supply for supplying electric power to the power storage device.

According to the present invention, the extra price can be calculated within a vehicle capable of communicating with the power supply that supplies electric power to the power storage device. Therefore, the extra price can be calculated without providing a price calculation device for each power supply.

Still more preferably, the price calculation device is provided at an external server capable of communicating with the vehicle and capable of communicating with a power supply for supplying electric power to the power storage device.

According to the present invention, the extra price can be calculated by the external server capable of communicating with the vehicle and capable of communicating with the power supply that supplies electric power to the power storage device. Therefore, the extra price can be calculated without providing a price calculation device for each vehicle and for each power supply.

A price calculation device according to a further aspect of the present invention calculates a price for electric power supplied to a power storage device for driving a vehicle. The price calculation device includes: an electric energy calculation unit for calculating an electric energy supplied to the power storage device; an acquisition unit for acquiring information for identifying whether the vehicle supplied with electric power is a vehicle traveling with only the electric power with which the power storage device is charged, or a vehicle traveling with an energy other than the electric power with which the power storage device is charged, in addition to the electric power with which the power storage device is charged; and an extra price calculation unit for calculating an extra price separate from a basic usage price for the electric energy, based on the electric energy and the acquired information.

According to the present invention, the electric energy supplied to the power storage device (namely the electric energy supplied as energy for the vehicle to travel) is calculated. Information is acquired for identifying whether the vehicle supplied with electric power is a vehicle traveling with only the electric power with which the power storage device is charged (electric vehicle for example), or a vehicle traveling with an energy other than the electric power with which the power storage device is charged, in addition to the electric power with which the power storage device is charged (hybrid vehicle for example). Based on the calculated electric energy and the acquired information, the extra price separate from the basic usage price for the electric energy is calculated. In this way, even in the case where electric power is supplied for example from a power station or the like to the vehicle and where the extra price per unit energy is different for example depending on whether the vehicle is an electric vehicle or hybrid vehicle, the extra price can still be calculated accurately. Accordingly, the price calculation device and the price calculation method can be provided that can accurately calculate the extra price for electric power used as energy for the vehicle to travel.

An information output device according to a further aspect of the present invention outputs information about a vehicle supplied with electric power from a power supply external to the vehicle. The output device includes: an information calculation unit for calculating at least one of information about a travel distance of the vehicle, and information about an electric energy consumed by the vehicle; a storage unit for storing the calculated information; and an output unit for outputting the stored information to an outside of the vehicle, as information for calculating an extra price separate from a basic usage price for the electric energy.

According to the present invention, at least one of the information about the travel distance of the vehicle and the information about the electric energy consumed by the vehicle is calculated and stored. As information for calculating the extra price, the stored information is output to the outside of the vehicle. Therefore, when the device receiving the output information calculates the extra price, the device can accurately calculate the extra price in accordance with the amount of travel on the road.

### BRIEF DESCRIPTION OF THE DRAWINGS

Fig. 1 is a schematic diagram showing a configuration of a communication system according to an embodiment of the present invention.
Fig. 2 is a block diagram showing a configuration of a communication system according to an embodiment of the present invention.
Fig. 3 is a functional block diagram of a controller according to an embodiment of the present invention.
Fig. 4 is a flowchart showing a control structure of an ECU mounted on a plug-in vehicle according to an embodiment of the present invention.
Fig. 5 is a (first) flowchart showing a control structure of an ECU for a plug-in vehicle according to an embodiment of the present invention.
Fig. 6 is a diagram showing battery-charging electric energy data generated by an ECU of an electric power supply device that is a price calculation device according to an embodiment of the present invention.
Fig. 7 is a (second) flowchart showing a control structure of an ECU for a plug-in vehicle according to an embodiment of the present invention.
Fig. 8 is a diagram showing price data generated by an ECU of an electric power supply device that is a price calculation device according to an embodiment of the present invention.

### DESCRIPTION OF THE REFERENCE SIGNS

20 house; 22 charging cable; 24 charging paddle; 26 home electrical appliance; 30 system power supply; 100 plug-in vehicle; 102 main battery; 104 inverter; 106 motor; 108 wheel; 110 AC/DC conversion unit for charging; 120, 230 connection detection unit; 122, 212 switch; 124 connector; 130 vehicle information storage unit; 140 travel information detection unit; 150, 240 input unit; 160, 250 display unit; 170, 270 communication antenna; 200 electric power supply device; 210 switchboard; 214 outlet; 220 monitor unit; 260 print unit; 300 external server; 1000, 2000 ECU; 2010 basic usage price calculation unit; 2020 batter-charging electric energy data generation unit; 2030 extra price calculation unit; 2040 price data generation unit.

### BEST MODES FOR CARRYING OUT THE INVENTION

Embodiments of the present invention will hereinafter be described with reference to the drawings. In the following description, the same components are denoted by the same reference characters. They are named identically and function identically. Therefore, a detailed description of them will not be repeated.

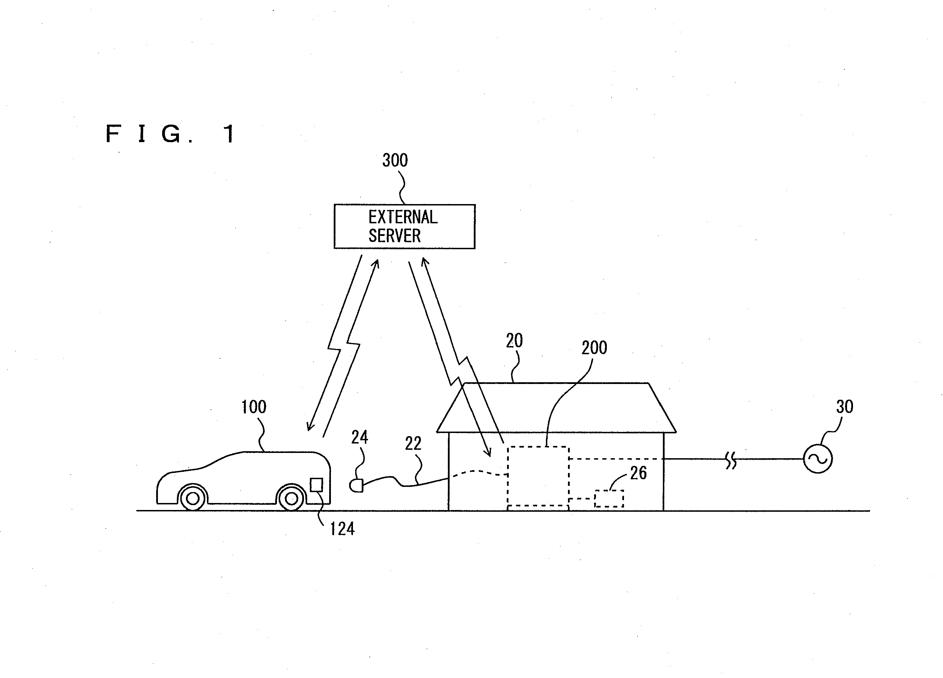

Referring to Fig. 1, a description will be given of a plug-in vehicle 100, an electric power supply device 200, and an external server 300 capable of communicating with the plug-in vehicle and the electric power supply device.

Plug-in vehicle 100 is mounted with a power storage device and travels using the electric power of the power storage device. Plug-in vehicle 100 is configured so that the power storage device is externally chargeable. For example, plug-in vehicle 100 is charged with electric power from electric power supply device 200.

Electric power supply device 200 is provided in a residential house 20 for household use, and supplies electric power which is fed from a system power supply 30 of an electric power company, to various home electrical appliances 26 in house 20.

To electric power supply device 200, a charging cable 22 used for supplying electric power to a vehicle is connected. Electric power supply device 200 supplies electric power via charging cable 22 to a registered vehicle permitted to be supplied with electric power (plug-in vehicle 100 for example). On plug-in vehicle 100 side, charging cable 22 has an end with a charging paddle 24. Charging paddle 24 is shaped so that the paddle is connectable to a connector 124 on plug-in vehicle 100 side while the paddle cannot be connected to home electrical appliance 26. The installation site of electric power supply device 200 is not limited to the inside of residential house 20, but may be installed, for example, at a vehicle-dedicated electric power station.

Further, electric power supply device 200 is capable of performing wireless communication with plug-in vehicle 100, and transmits and receives necessary information to and from the vehicle. The communication between plug-in vehicle 100 and electric power supply device 200 is not limited to wireless communication but may be, for example, power line communication by means of charging cable 22.

External server 300 is capable of performing wireless communication with plug-in vehicle 100 and electric power supply device 200, and downloads or uploads necessary information in response to a request from a user of plug-in vehicle 100 or electric power supply device 200, or from an electric power company which manages system power supply 30. Electric power supply device 200 and external server 300 may communicate with each other by means of a high-speed line such as ADSL (Asymmetric Digital Subscriber Line), optical fiber, or the like. The installation site of external server 300 may be either inside or outside of house 20.

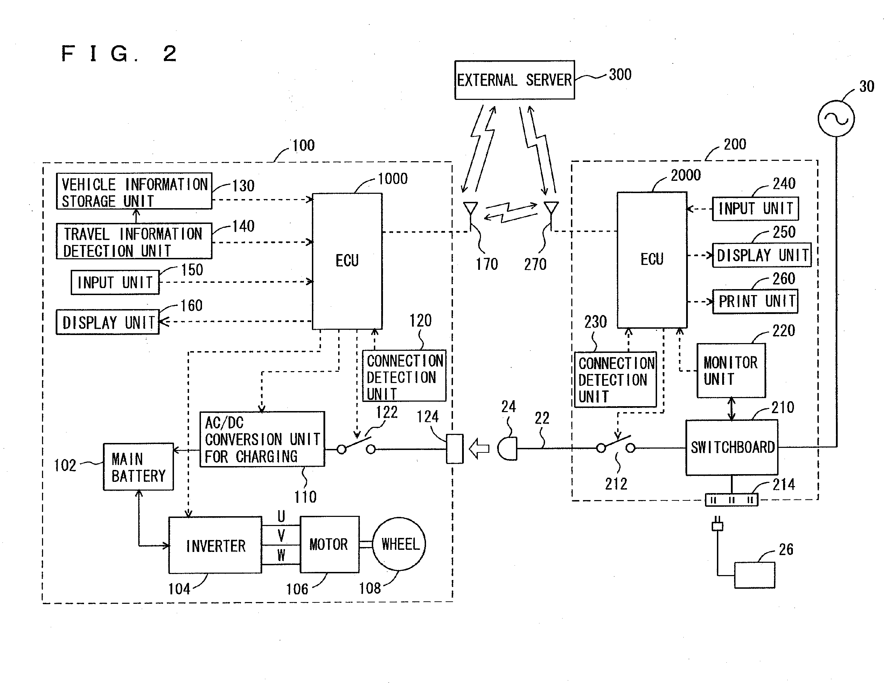

Referring to Fig. 2, a more detailed description will be given of plug-in vehicle 100 and electric power supply device 200 according to the present embodiment.

Plug-in vehicle 100 includes a wheel 108, a motor 106 for driving wheel 108, an inverter 104 for supplying three-phase AC power to motor 106, a main battery 102 for storing electric power to be supplied to motor 106, and an ECU 1000 for performing general control of plug-in vehicle 100. While plug-in vehicle 100 refers to a vehicle using only electric power as energy for traveling (hereinafter also referred to as electric vehicle), the present invention is applicable as well to a vehicle using electric power as well as energy other than electric power for traveling (hereinafter also referred to as hybrid vehicle).

Plug-in vehicle 100 further includes connector 124 to which charging paddle 24 is connected, an AC/DC conversion unit 110 for charging provided for converting AC power fed to connector 124 into DC power and providing the DC power to main battery 102, a switch 122 for connecting connector 124 and AC/DC conversion unit 110 for charging, and a connection detection unit 120 for detecting connection of charging paddle 24 to connector 124.

Plug-in vehicle 100 also includes a vehicle information storage unit 130, a travel information detection unit 140, an input unit 150, a display unit 160, and a communication antenna 170.

Vehicle information storage unit 130 stores, in advance, information such as vehicle ID, vehicle type, vehicle size, and vehicle weight, for example, and also stores information detected by travel information detection unit 140. Vehicle information storage unit 130 transmits the stored information to ECU 1000, based on a command from ECU 1000.

Here, the vehicle ID is unique information for distinguishing plug-in vehicle 100 from other vehicles, and used, for example, by electric power supply device 200 for determining whether the vehicle is a registered vehicle permitted in advance to be supplied with electric power. The following description uses "001" as the vehicle ID of plug-in vehicle 100 and uses "002" as the vehicle ID of a hybrid vehicle (not shown) that is another registered vehicle.

The vehicle type is information with which whether the vehicle is electric vehicle or hybrid vehicle can be identified. The following description uses "EV" as the vehicle type of an electric vehicle such as plug-in vehicle 100, and uses "HV" as the vehicle type of a hybrid vehicle.

Travel information detection unit 140 detects various kinds of information about travel of plug-in vehicle 100, such as vehicle speed, travel record (travel distance per trip, travel position, travel time, travel route), the state of charge SOC of main battery 102, and the amount of power consumption, for example, and transmits a signal representing the result of detection to ECU 1000 and vehicle information storage unit 130. In the case where the vehicle is a hybrid vehicle, travel information detection unit 140 may detect the amount of carbon dioxide emission in addition to the above-described information. Travel information detection unit 140 may be separate sensors provided for respective information items to be detected.

Input unit 150 is a device to which a request or the like of a user of plug-in vehicle 100 is input, and transmits a signal representing the input to ECU 1000.

Display unit 160 displays, in the form of an image, the information or the like transmitted from ECU 1000.

Communication antenna 170 performs wireless communication with electric power supply device 200 and external server 300. Communication antenna 170 transmits, to ECU 1000, information received from electric power supply device 200 and external server 300. Communication antenna 170 also transmits information from ECU 1000 to electric power supply device 200 and external server 300.

When charging paddle 24 is connected to connector 124 and the state of charge SOC is smaller than a threshold value, ECU 1000 causes switch 122 to change from an opening state to a connecting state and causes charging-purpose AC/DC conversion unit 110 to operate. The AC power supplied from electric power supply device 200 is thus converted into DC power with which main battery 102 is charged. When the state of charge SOC becomes larger than the threshold value, ECU 1000 stops charging-purpose AC/DC conversion unit 110, opens switch 122, makes a request via communication antenna 170 to electric power supply device 200 to end the supply of electric power, so that charging is stopped.

ECU 1000 also performs wireless communication with electric power supply device 200 or external server 300 by means of communication antenna 170, in response to a request from a user of plug-in vehicle 100 that is input to input unit 150, a request from a user of electric power supply device 200 or a request from a user of external server 300 that is received via communication antenna 170.

Electric power supply device 200 includes a switchboard 210, a switch 212 provided between charging cable 22 and switchboard 210, an outlet 214 in which a plug of home electrical appliance 26 is inserted, a monitor unit 220, a connection detection unit 230, an input unit 240, a display unit 250, a print unit 260, a communication antenna 270, and an ECU 2000 for performing general control of electric power supply device 200.

Switchboard 210 is connected to system power supply 30 of an electric power company for supplying electric power fed from system power supply 30 via outlet 214 to home electrical appliance 26, and supplying the electric power via charging cable 22 to plug-in vehicle 100.

Monitor unit 220 stratifies the fed electric power into the electric power supplied from switchboard 210 to home electrical appliance 26 and the electric power supplied from switchboard 210 to charging cable 22 (namely the charging power for main battery 102 of plug-in vehicle 100), detects, for each of the electric power supplied to the home electrical appliance and the electric power supplied to the charging cable, how much the electric power is used, the date of usage, the time of usage, and the period of usage, for example, and transmits a signal representing the result of detection to ECU 2000. Monitor unit 220 also controls the electric power supplied from switchboard 210, based on a command signal from ECU 2000.

Connection detection unit 230 detects that charging paddle 24 is connected to connector 124 of plug-in vehicle 100, and transmits a signal representing the result of detection to ECU 2000.

Input unit 240 is a device to which a request or the like of a user of electric power supply device 200 is input, and transmits a signal representing the input to ECU 2000.

Display unit 250 displays, in the form of an image, information or the like transmitted from ECU 2000. Print unit 260 prints the information or the like transmitted from ECU 2000 on paper or the like, and outputs the printed information.

Communication antenna 270 performs wireless communication with plug-in vehicle 100 and external server 300. Communication antenna 270 receives information from plug-in vehicle 100 and external server 300 and transmits the information to ECU 2000. Communication antenna 270 also transmits information from ECU 2000 to plug-in vehicle 100 and external server 3 00.

When charging paddle 24 is connected to connector 124, ECU 2000 recognizes that a request for charging is made from plug-in vehicle 100 to electric power supply device 200, then closes switch 212 and transmits a command signal to monitor unit 220 so that supply of electric power from switchboard 210 to charging cable 22 is started.

Further, ECU 2000 communicates information by means of communication antenna 270 to and from plug-in vehicle 100 or external server 300, in response to a request from a user of electric power supply device 200 that is input to input unit 240, a request from a user of plug-in vehicle 100 or a request from a user of external server 300 that is received via communication antenna 270.

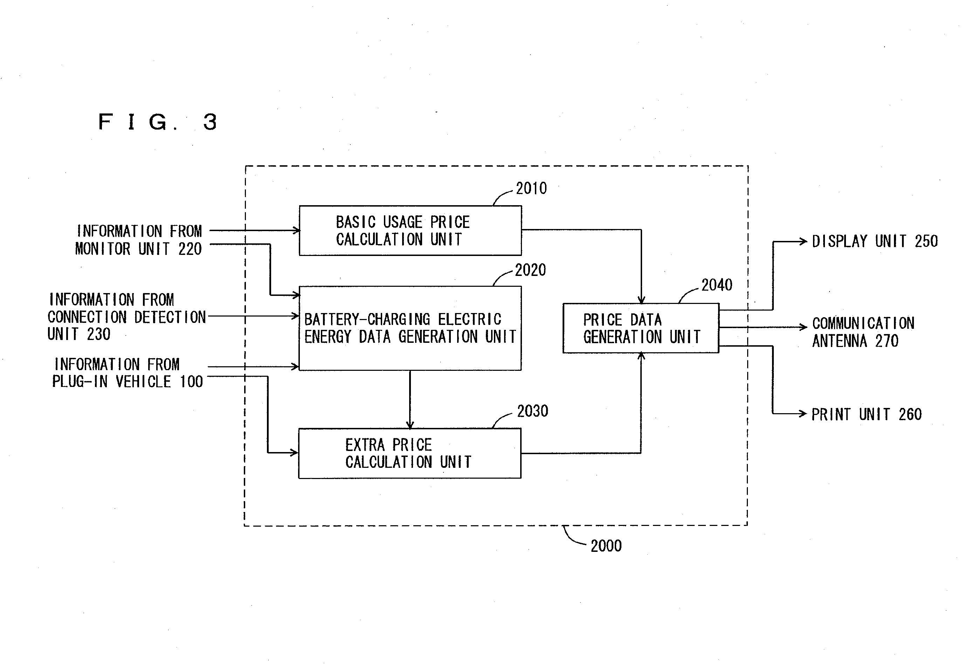

Referring to Fig. 3, a description will be given of a functional block diagram of a price calculation device according to the present embodiment. As shown in Fig. 3, the price calculation device includes a basic usage price calculation unit 2010, a battery-charging electric energy data generation unit 2020, an extra price calculation unit 2030, and a price data generation unit 2040.

Basic usage price calculation unit 2010 calculates a basic usage price for consumed electric power, based on information from monitor unit 220. Basic usage price calculation unit 2010 calculates a midnight electric utility price and a non-midnight electric utility price, in consideration of how much electric power has been used and when the electric power was used.

Battery-charging electric energy data generation unit 2020 generates data about an electric energy supplied from electric power supply device 200 to main battery 102 (hereinafter also referred to as battery-charging electric energy), based on information from monitor unit 220, a signal from connection detection unit 230, and information about plug-in vehicle 100 received via communication antenna 270, and transmits the data to extra price calculation unit 2030. The battery-charging electric energy data will be described later in detail.

Extra price calculation unit 2030 calculates an extra price for electric power used for charging main battery 102, based on information about plug-in vehicle 100 and the battery-charging electric energy data. The extra price refers to a price separate from the basic usage price for electric power, and is a tax for example imposed on a user having used electric power as energy for the vehicle to travel (hereinafter also referred to as traveling electric power tax), for use as a financial resource for upgrade and maintenance of the infrastructure such as upgrade and maintenance of roads for vehicles to travel. The extra price may be any as long as it is imposed on the user or owner of the vehicle by a third party (including natural person as well as legal person such as nation and company). The third party in this case also includes any party other than the energy supplier (such as electric power company). The charged price includes any price other than the cost for energy. The purpose of price charging of this type includes use of it for upgrade and maintenance of the social infrastructure, for a fee for emission of carbon dioxide from a power station or the like, and for development of future vehicles, for example. The purpose and use of the price charging are not limited to the above-exemplified ones.

Price data generation unit 2040 generates data about the price corresponding to the sum of the basic usage price and the extra price (hereinafter also simply referred to price data), and transmits the data to display unit 250, communication antenna 270, and print unit 260. The price data shows the price to be paid by the user of electric power supply device 200 to the electric power company. Of the price paid by the user of electric power supply device 200 to the electric power company, the extra price is paid by the electric power company to the national government or local government, as the traveling electric power tax as mentioned above.

A controller in the present embodiment having such a functional block as described above may be implemented by hardware that is mainly configured with digital circuitry and/or analog circuitry, or software that is mainly configured with a CPU (Central Processing Unit) and a memory included in ECU 2000, and a program read from the memory and executed on the CPU. In general, the controller implemented in the form of hardware is advantageous in terms of the operating speed, and the controller implemented in the form of software is advantageous in terms of change in design. In the following, the controller implemented in the form of software will be described. It should be noted that a recording medium having such a program recorded thereon is also a form of the present invention.

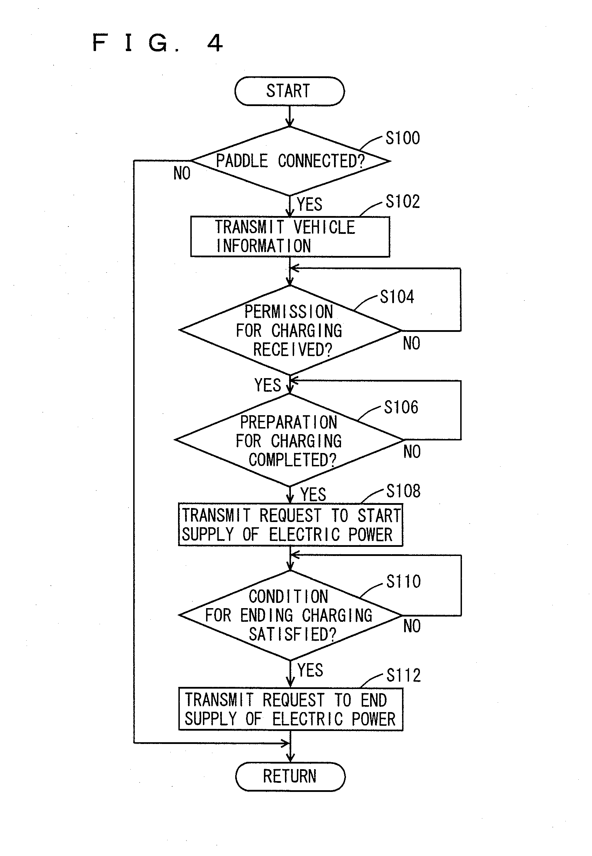

Referring to Fig. 4, a description will be given of a control structure of a program executed by ECU 1000 of plug-in vehicle 100 in the present embodiment, when charging of main battery 102 is to be started. This program is repeatedly executed following a predetermined cycle time.

In step (hereinafter step is abbreviated as S) 100, ECU 1000 determines, based on a signal from connection detection unit 120, whether charging paddle 24 is connected to connector 124. When charging paddle 24 is connected to connector 124 (YES in S100), the process proceeds to S102. Otherwise (NO in S100), the process is ended.

In S102, ECU 1000 transmits vehicle information stored in vehicle information storage unit 130 to electric power supply device 200 via communication antenna 170. The transmitted vehicle information includes above-described vehicle ID, vehicle type, vehicle size, vehicle weight, travel record, amount of power consumption, for example.

In S104, ECU 1000 determines whether permission for charging is received from electric power supply device 200 via communication antenna 170. When the permission for charging is received (YES in S104), the process proceeds to S106. Otherwise (NO in S104), the process returns to S104 and waits until the permission for charging is received.

In S106, ECU 1000 determines whether preparation for charging in plug-in vehicle 100 is completed. When the preparation for charging is completed (YES in S106), the process proceeds to S 108. Otherwise (NO in S106), the process returns to S106 and waits until the preparation for charging is completed.

In S108, ECU 1000 transmits, to electric power supply device 200 via communication antenna 170, a request to start supply of electric power. In response, supply of electric power from electric power supply device 200 is started.

In S 110, ECU 1000 determines whether a condition for ending charging is satisfied. For example, ECU 1000 determines that the condition for ending charging is met, when the SOC of main battery 102 exceeds the upper limit or when a user makes a request to end charging. When the condition for ending charging is satisfied (YES in S100), the process proceeds to S 112. Otherwise (NO in S100), the process returns to S 110 and waits until the condition for ending charging is satisfied.

In S 112, ECU 1000 transmits, to electric power supply device 200 via communication antenna 170, a request to end supply of electric power. In response, supply of electric power from electric power supply device 200 is stopped.

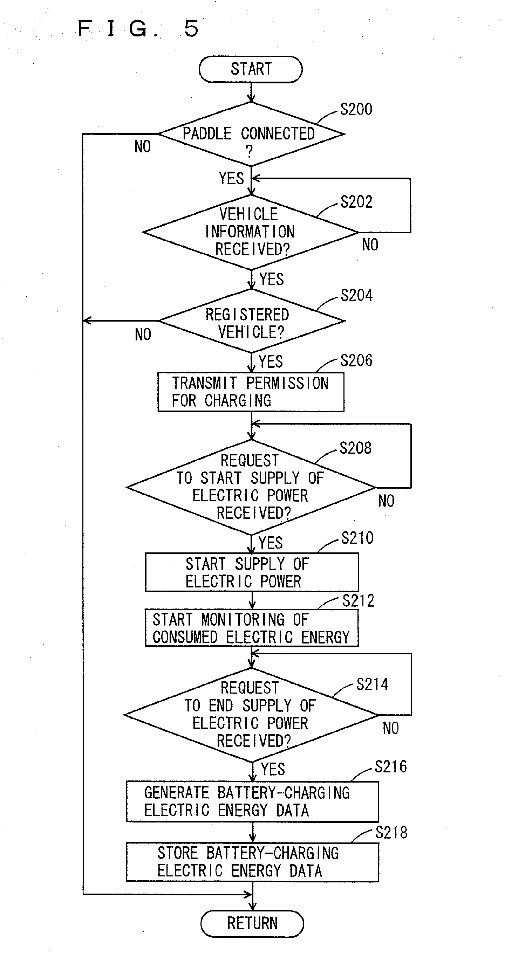

Referring to Fig. 5, a description will be given of a control structure of a program executed by ECU 2000 operating as a price calculation device in the present embodiment, in generating battery-charging electric energy data. This program is repeatedly executed following a predetermined cycle time.

In S200, ECU 2000 determines, based on a signal from connection detection unit 230, whether charging paddle 24 is connected to connector 124. When charging paddle 24 is connected to connector 124 (YES in S200), the process proceeds to S202. Otherwise (NO in S200), the process is ended.

In S202, ECU 2000 determines whether vehicle information is received from plug-in vehicle 100 via communication antenna 270. When the vehicle information is received (YES in S202), the process proceeds to S204. Otherwise (NO in S202), the process returns to S202 and waits until the vehicle information is received.

In S204, ECU 2000 determines, based on the vehicle ID included in the vehicle information, whether plug-in vehicle 100 is a registered vehicle permitted to be supplied with electric power from electric power supply device 200. When the vehicle is a registered vehicle (YES in S204), the process proceeds to 5206. Otherwise (NO in S204), the process is ended.

In S206, ECU 2000 transmits permission for charging to plug-in vehicle 100 via communication antenna 270.

In S208, ECU 2000 determines whether a request to start supply of electric power is received from plug-in vehicle 100 via communication antenna 270. When the request to start supply of electric power is received (YES in S208), the process proceeds to S210. Otherwise (NO in S208), the process returns to S208 and waits until the request to start supply of electric power is received.

In S210, ECU 2000 starts supply of electric power to plug-in vehicle 100. In S212, ECU 2000 starts monitoring of a consumed electric energy.

In S214, ECU 2000 determines whether a request to end supply of electric power is received from plug-in vehicle 100 via communication antenna 270. When the request to end supply of electric power is received (YES in S214), the process proceeds to S216. Otherwise (NO in S214), the process returns to S214 and waits until the request to end supply of electric power is received.

In S216, ECU 2000 generates battery-charging electric energy data. The battery-charring electric energy data includes, in addition to a charging electric energy supplied to plug-in vehicle 100, the date of charging, the time when charging is started, the time when charging is ended, the vehicle information received from plug-in vehicle 100, and a price-charging rank calculated based on the vehicle information. The price-charging rank is calculated, for example, so that the price-charging rank is stratified in accordance with the vehicle information (such as vehicle type, vehicle size, vehicle weight, travel record, consumed electric energy for example) based on which the extra price is discounted or raised. The price-charging rank may be included in advance in the vehicle information.

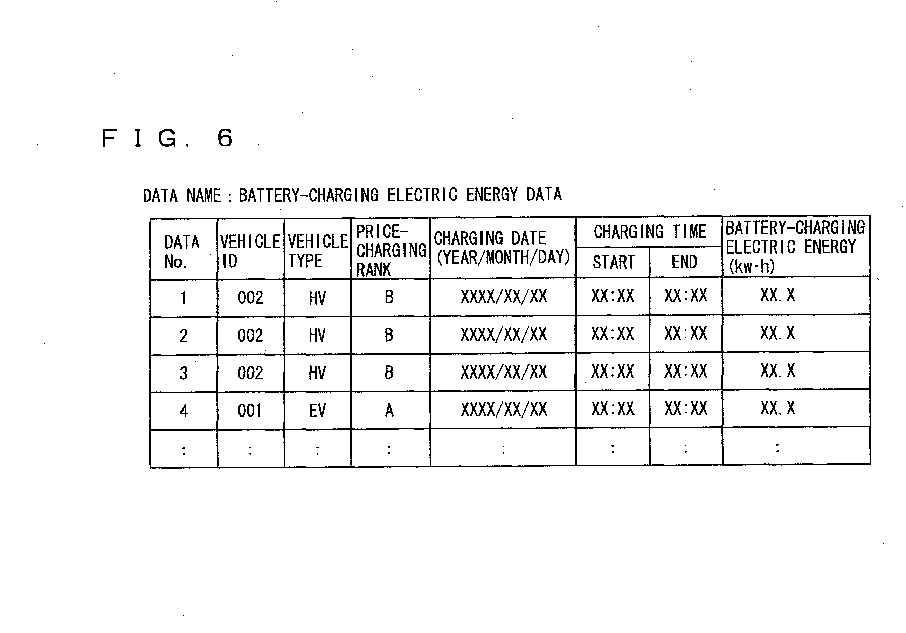

In S218, ECU 2000 stores the battery-charging electric energy data in an internal memory (not shown) of ECU 2000. Fig. 6 shows an example of the battery-charging electric energy data stored in ECU 2000. As shown in Fig. 6, ECU 2000 assigns a data number to the generated battery-charging electric energy data, and stores the data together with the data in the past. In Fig. 6, the data of No. 1 to the data of No. 3 are each the battery-charging electric energy data about the electric energy supplied to a vehicle of vehicle ID "002" (namely a hybrid vehicle which is different from plug-in vehicle 100), vehicle type "HV (hybrid vehicle)", and price-charging rank "B". The data of No. 4 in Fig. 6 is the battery-charging electric energy data about the electric energy supplied to a vehicle of vehicle ID "001" (namely plug-in vehicle 100), vehicle type "EV (electric vehicle)", and price-charging rank "A".

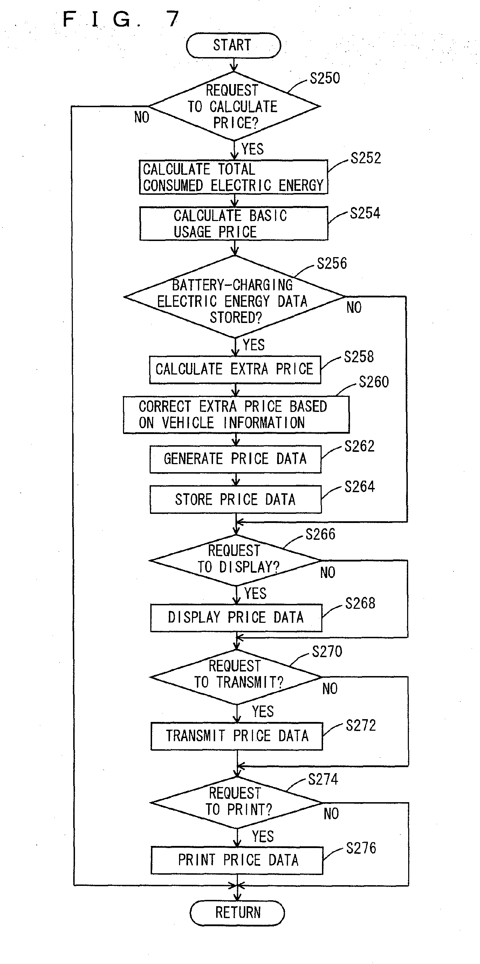

Referring to Fig. 7, a description will be given of a control structure of a program executed by ECU 2000 operating as a price calculation device in the present embodiment, in calculating an extra price and generating price data. This program is repeatedly executed following a predetermined cycle time.

In S250, ECU 2000 determines whether a request to calculate a price for consumed electric power is made. The request to calculate the price may be a request from any of the user of plug-in vehicle 100, the user of electric power supply device 200, and the user of external server 300 (such as electric power company, national government, or local government, for example). When the request to calculate the price is made (YES in S250), the process proceeds to S252. Otherwise (NO in S250), the process is ended.

In S252, ECU 2000 calculates the total consumed electric energy, based on information from monitor unit 220. Here, the total consumed electric energy is the total electric energy supplied from system power supply 30 to electric power supply device 200 in a month for which the price is to be settled, and includes both of the electric energy supplied to home electrical appliance 26 and the electric energy supplied to plug-in vehicle 100.

In S254, ECU 2000 calculates a basic usage price for the total consumed electric energy, based on information from monitor unit 220. Specifically, based on the information from monitor unit 220, ECU 2000 calculates the electric utility price for a non-midnight period (the period from 7 a.m. to 0 a.m. for example), and the electric utility price for a midnight period (the period from 0 a.m. to 7 a.m. for example) for which the price per unit is lower than that for the non-midnight period, and calculates the sum of these prices. The calculated sum is the basic usage price for the total consumed electric energy. The way to calculate the basic usage price is not limited to the above-described one.

In S256, ECU 2000 determines whether the battery-charging electric energy data is stored in the internal memory. When the battery-charging electric energy data is stored (YES in S256), the process proceeds to S258. Otherwise (NO in S256), the process proceeds to S266.

In S258, ECU 2000 calculates an extra price based on the battery-charging electric energy data. For example, ECU 2000 sums respective charging electric energies included in the battery-charging electric energy data, and calculates the product of the sum of the electric energies and an extra price per unit energy. The calculated product is the extra price to be calculated here. The way to calculate the extra price is not limited to the above-described one.

In S260, ECU 2000 corrects the extra price based on the vehicle information about plug-in vehicle 100. For example, when a hybrid vehicle and an electric vehicle are different in terms of extra price per unit energy, ECU 2000 stratifies the total charging electric energy into the total charging electric energy for the vehicle type "EV" and the total charging electric energy for the vehicle type "HV", based on the vehicle types in the battery-charging electric energy data, and corrects the extra price in accordance with each charging electric energy. In the case where the extra price is discounted or raised depending on any vehicle information other than the vehicle type (the vehicle information such as vehicle size, vehicle weight, travel record, consumed electric energy for example), the extra price may be corrected based on the price-charging rank. For example, the extra price may be corrected so that the extra price is raised to a greater extent as the vehicle size is larger, the vehicle weight is heavier, the travel distance is longer, and/or the consumed electric energy is larger, for example.

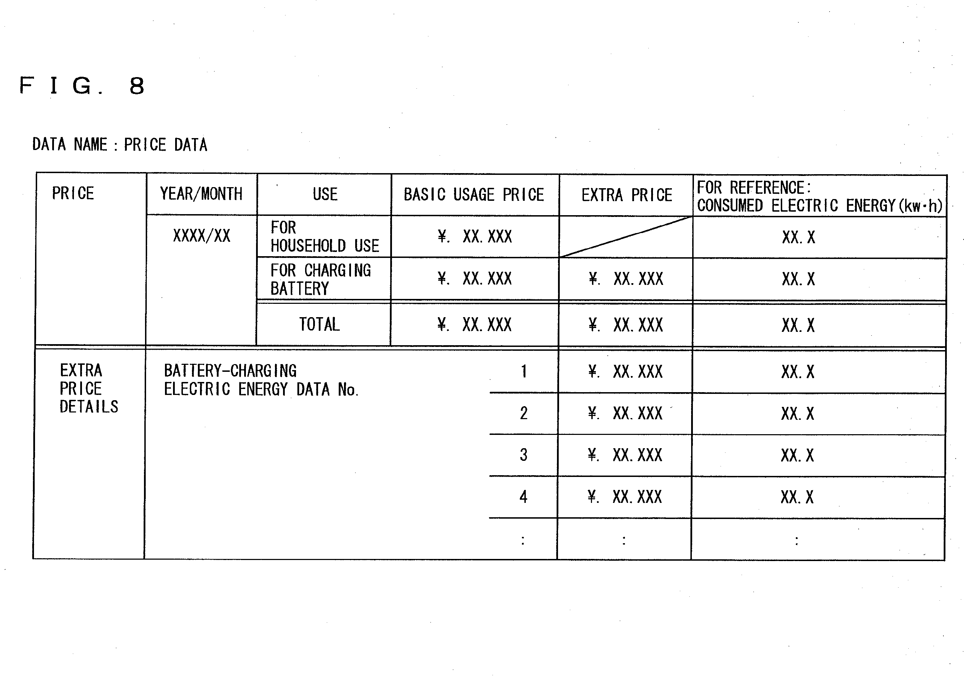

In S262, ECU 2000 generates price data in which the price is stratified into the basic usage price and the extra price. Fig. 8 shows an example of the price data generated by ECU 2000. As shown in Fig. 8, ECU 2000 generates the data in which the basic usage price and the extra price are each further classified according to use (for household use, for battery charging, and the sum of them). ECU 2000 also generates data about details of the extra price, namely stratifies the extra price into respective extra prices for respective data numbers of the battery-charging electric energy data. By way of reference, the consumed electric energy corresponding to each price is generated. In S264, ECU 2000 stores the price data.

In S266, ECU 2000 determines whether a request to display is made. When the request to display is made (YES in S266), the process proceeds to S268.

Otherwise (NO in S268), the process proceeds to S270. In S268, ECU 2000 displays the contents of the stored price data on display unit 250.

In S270, ECU 2000 determines whether a request to transmit is made. When the request to transmit is made (YES in S270), the process proceeds to S272. Otherwise (NO in S270), the process proceeds to S274. In S272, ECU 2000 transmits the stored price data to the source of the transmission request (plug-in vehicle 100 or external server 300).

In S274, ECU 2000 determines whether a request to print is made. When the request to print is made (YES in S274), the process proceeds to S276. Otherwise (NO in S274), the process is ended. In S276, ECU 2000 causes print unit 260 to print the contents of the stored price data.

A description will now be given of the extra price calculated by ECU 2000 operating as a price calculation device in the present embodiment, based on the above-described structures and flowcharts.

When charging paddle 24 is connected to connector 124 (YES in S100), the vehicle information about plug-in vehicle 100 is transmitted from plug-in vehicle 100 to electric power supply device 200 (S102). The vehicle information includes information based on which the extra price is to be discounted or raised (information such as vehicle ID, vehicle type, vehicle size, vehicle weight, travel record, consumed electric energy for example). Therefore, when ECU 2000 of electric power supply device 200 calculates the extra price, ECU 2000 can accurately calculate the extra price by using the above-exemplified information.

When electric power supply device 200 receives the vehicle information from plug-in vehicle 100 (YES in S202), it is determined, based on the vehicle ID included in the received vehicle information, whether plug-in vehicle 100 is a registered vehicle (S204). When plug-in vehicle 100 is a registered vehicle (YES in S204), permission for charging is transmitted to plug-in vehicle 100 (S206). When a request to start supply of electric power is received from plug-in vehicle 100 (YES in S208), supply of electric power to plug-in vehicle 100 is started (S210), and monitoring of consumed electric energy is started (S212).

After supply of electric power to plug-in vehicle 100 is stopped (YES in S214), the battery-charring electric energy data as shown in Fig. 6 described above is generated and stored together with the data in the past (S216, S218). When main battery 102 is charged, such a process as described above is repeatedly executed.

After this, when a request to calculate the price is made (YES in S250) for settlement of the monthly electric utility price, for example, the basic usage price and the extra price are calculated (S252 to S260), and the price data is generated (S262).

Here, for calculation of the extra price (S258), respective charging electric energies included in the pieces of battery-charging electric energy data are summed, and the product of the sum of the electric energies and an extra price per unit energy is calculated to determine the extra price. In other words, the extra price is calculated based on only the batter-charging electric energies. Therefore, even when main battery 102 is charged by electric power supply device 200 which also supplies electric power to home electrical appliance 26 in addition to the vehicle, the extra price can be calculated accurately.

Further, the calculated extra price is corrected based on the vehicle information about plug-in vehicle 100 (S260). Thus, even when the extra price per unit energy is different depending on whether the vehicle is electric vehicle or hybrid vehicle, the vehicle type can be used to identify whether plug-in vehicle 100 is "EV" or "HV", so that the extra price can be precisely calculated. Furthermore, even when the extra price is discounted or raised depending on, for example, vehicle size, vehicle weight, travel record, and/or consumed electric energy for example, the extra price can be corrected based on the vehicle information other than the vehicle type.

Moreover, the price data is generated, as shown in Fig. 8 described above, in such a manner that the price is classified into the one for household use, the one for charging battery, and the sum of them, and is also stratified into the basic usage price and the extra price (S262). The generated price data is displayed, printed or transmitted in response to each request (S266 to S276). In this way, both of the payer of the extra price (user of plug-in vehicle 100 or user of electric power supply device 200 for example) and the collector of the extra price (electric power company, national government, or local government for example) can see and check the extra price. Further, even in the case where the collector of the basic usage price is the electric company and the collector of the extra price is the national or local government (namely the collector of the basic usage price and the collector of the extra price are different), for example, the generated data may be transmitted to each collector, so that the extra price can be collected in any of various ways, such as that the basic usage price and the extra price are separately collected.

As heretofore described, the price calculation device in the present embodiment calculates the charging electric energy with which the battery used for driving the vehicle has been charged. Based on the charging electric energy, the price calculation device calculates, separately from the basic usage price for the electric energy, the extra price for use in upgrade and maintenance of the infrastructure which is necessary for vehicles to travel. Thus, the extra price can be calculated based on only the electric energy which is a part of the total consumed electric energy and is used as energy for the vehicle to travel. Therefore, when the battery used for driving the vehicle is charged by a household power supply, the extra price can be calculated accurately as well.

While the present embodiment has been described in connection with the case where the price calculation device is provided within electric power supply device 200, the place where the price calculation device is provided is not limited to within the electric power supply device. For example, the price calculation device may be provided within house 20 and outside electric power supply device 200, or provided within plug-in vehicle 100, or provided at external server 300 or power station. In the case where the price calculation device is provided at the power station, the extra price can be calculated based on the vehicle information, without stratifying the electric power into electric power for household use and electric power supplied to the vehicle. Here, the information about the vehicle type used for calculating the extra price may be information that is input via the input unit by a person in charge of the power station.

Alternatively, the price calculation device may be provided at a place for payment of a parking fee, expressway toll or the like, and the extra price may be calculated based on the vehicle information obtained through communication with the vehicle being parked or traveling on the expressway, so that the extra price may be collected together with the parking fee or expressway toll.

Further, while the present embodiment has been described in connection with the case where the vehicle information stored in the vehicle itself is transmitted from the vehicle itself to the price calculation device, the vehicle information may be stored for example in a portable terminal of the user of the vehicle, and transmitted from the portable terminal of this user to the price calculation device.

Furthermore, while the present embodiment has been described in connection with a method for calculating the extra price for the electric power used as traveling energy, the price calculation device in the present embodiment is applicable as well to the vehicle caused to travel using another energy (such as hydrogen).

Travel information detection unit 140 of plug-in vehicle 100 may detect, in addition to the vehicle information including vehicle speed, travel record, state of charge SOC of main battery 102, and consumed electric energy, vehicle information about the charging electric energy for main battery 102 (electric energy having been supplied from electric power supply device 200 to main battery 102). Here, the vehicle information including the above-described information items may be output to the outside of the vehicle, not for use in calculating the electric utility price but for any of other purposes. An example of the other purposes may be the use of the vehicle information in order to know the degree of aging degradation of plug-in vehicle 100 or other components.

A power storage device (battery) of a plug-in hybrid vehicle is charged with electric power that generally includes two kinds of electric power, namely the electric power supplied from system power supply 30 outside the vehicle, and the electric power generated by a generator in the vehicle by operating the internal combustion engine using fuel or the like. In the case where the present embodiment provides, to the plug-in hybrid vehicle, a sensor (such as current sensor and voltage sensor) for calculating the electric energy, it is desirable to provide the sensor so that at least only the electric energy supplied from system power supply 30 outside the vehicle can be measured independently of the electric energy generated by the generator in the vehicle. Specifically, it is supposed for example that separate lines are provided in the vehicle for supplying electric power to the power storage device, and one of the lines is connected to the generator caused to generate electric power by operating the internal combustion engine, while the other line is connected to an interface provided for receiving electric power from system power supply 30 outside the vehicle. In this case, it is desirable to provide the sensor, which is used for calculating the electric energy, at the line connected to the interface for receiving electric power from system power supply 30 outside the vehicle, so that only the electric energy supplied from the interface to the power storage device may be calculated. Here, a sensor (such as current sensor and voltage sensor) for calculating the electric energy supplied for household use from system power supply 30 to home electrical appliance 26 may be provided outside the vehicle.

Power supply device 200 is configured so that the vehicle's electric energy that is supplied from system power supply 30 to plug-in vehicle 100 is calculated independently of the household electric energy that is supplied from system power supply 3 0 to home electrical appliance 26. This configuration may be implemented with software mainly configured with a program executed on ECU 2000 based on information from monitor unit 220, or implemented with hardware mainly configured to count the consumed electric energy without resetting the count, like a common household electric energy meter or the like. In the case of implementation with the electric energy meter, two meters, namely a meter for the vehicle and a meter for the home electrical appliance, for example, may be provided. The meter for the home electrical appliance may count the electric power of a power line for home electrical appliance 26 located downstream of switchboard 210 (where the electric power from system power supply 30 is physically separated into the one for plug-in vehicle 100 and the one for home electrical appliance 26). The meter for the vehicle may count the electric power of a power line (charging cable 22 for example) for plug-in vehicle 100 located downstream of switchboard 210.

Electric power supply device 200 provided in residential house 20 for household use may calculate or store the electric energy for the vehicle and the electric energy for the home electrical appliance separately from each other, without further calculating the electric utility price, and transmit both of the calculated or stored electric energies to an electric power company by superimposing the electric energies on the electric power via an electric power line (by means of power line communication), for example. In this case, a storage device that separately stores these electric energies transmitted from the household may be provided at the electric power company, and the electric power company may calculate the electric utility price based on these stored electric energies.

It should be construed that embodiments disclosed herein are by way of illustration in all respects, not by way of limitation. It is intended that the scope of the present invention is defined by claims, not by the description above, and includes all modifications and variations equivalent in meaning and scope to the claims.

## Claims

1. An electric energy calculation device for calculating an electric energy of an electric power system capable of supplying electric power to an electric vehicle and to an electrical appliance other than the electric vehicle, said electric energy calculation device comprising:
a supply unit for distributing electric power of said electric power system among said electric vehicle and said electrical appliance; and
a calculation unit for calculating an electric energy supplied from said electric power system to said electric vehicle, independently of an electric energy supplied from said electric power system to said electrical appliance.

2. An electric energy calculation device for calculating an electric energy of an electric power system distributing electric power among an electric vehicle and an electrical appliance other than the electric vehicle, said electric energy calculation device comprising:
a first storage unit for storing an electric energy supplied from said electric power system to said electrical appliance; and
a second storage unit for storing an electric energy supplied from said electric power system to said electric vehicle, independently of the electric energy supplied from said electric power system to said electrical appliance.

3. A price calculation device for calculating a price for consumed electric power, comprising:
a determination unit for determining whether said consumed electric power is electric power with which a power storage device for driving a vehicle is charged;
an electric energy calculation unit for calculating an electric energy corresponding to the electric power with which said power storage device is charged as determined by said determination unit; and
an extra price calculation unit for calculating a charging electric energy by summing said calculated electric energy and, based on the calculated charging electric energy, calculating an extra price separate from a basic usage price for an electric energy.

4. The price calculation device according to claim 3, further comprising an acquisition unit for acquiring information about said vehicle, wherein
said extra price calculation unit calculates said extra price based on said information about said vehicle in addition to said charging electric energy.

5. The price calculation device according to claim 4, wherein
said information about said vehicle is information for identifying whether said vehicle is a first vehicle traveling with only the electric power with which said power storage device is charged, or a second vehicle traveling with an energy other than said electric power with which said power storage device is charged, in addition to said electric power with which said power storage device is charged, and
said extra price calculation unit calculates an extra price for a charging electric energy of said first vehicle and an extra price for a charging electric energy of said second vehicle, in respective manners different from each other.

6. The price calculation device according to claim 4, wherein
said information about said vehicle is at least one of information about a travel distance of said vehicle and information about an electric energy consumed by said vehicle, and
said extra price calculation unit calculates said extra price in a manner that said extra price is higher as said travel distance is longer or as said consumed electric energy is larger.

7. The price calculation device according to claim 3, further comprising a generation unit for generating data for separately outputting said basic usage price and said extra price.

8. The price calculation device according to claim 3, wherein
said price calculation device is provided within a building having a power supply for supplying electric power to said power storage device.

9. The price calculation device according to claim 3, wherein
said price calculation device is provided at a vehicle capable of communicating with a power supply for supplying electric power to said power storage device.

10. The price calculation device according to claim 3, wherein
said price calculation device is provided at an external server capable of communicating with said vehicle and capable of communicating with a power supply for supplying electric power to said power storage device.

11. A price calculation device for calculating a price for electric power supplied to a power storage device for driving a vehicle, said price calculation device comprising:
an electric energy calculation unit for calculating an electric energy supplied to said power storage device;
an acquisition unit for acquiring information for identifying whether the vehicle supplied with electric power is a vehicle traveling with only the electric power with which said power storage device is charged, or a vehicle traveling with an energy other than said electric power with which said power storage device is charged, in addition to said electric power with which said power storage device is charged; and
an extra price calculation unit for calculating an extra price separate from a basic usage price for said electric energy, based on said electric energy and said acquired information.

12. An information output device for a vehicle supplied with electric power from a power supply external to the vehicle, said information output device comprising:
an information calculation unit for calculating at least one of information about a travel distance of said vehicle, information about an electric energy consumed by said vehicle, and information about an electric energy which is supplied from the power supply external to said vehicle and with which said vehicle is charged; and
an output unit for outputting said calculated information to an outside of said vehicle.

13. A price calculation method performed by a price calculation device for calculating a price for consumed electric power, comprising the steps of:
determining whether said consumed electric power is electric power with which a power storage device for driving a vehicle is charged;
calculating an electric energy corresponding to the electric power with which said power storage device is charged as determined in said determining step; and
an extra price calculation step of calculating a charging electric energy by summing said calculated electric energy and, based on the calculated charging electric energy, calculating an extra price separate from a basic usage price for an electric energy.

14. The price calculation method according to claim 13, further comprising the step of acquiring information about said vehicle, wherein
said extra price calculation step calculates said extra price based on said information about said vehicle in addition to said charging electric energy.

15. The price calculation method according to claim 14, wherein
said information about said vehicle is information for identifying whether said vehicle is a first vehicle traveling with only the electric power with which said power storage device is charged, or a second vehicle traveling with an energy other than said electric power with which said power storage device is charged, in addition to said electric power with which said power storage device is charged, and
said extra price calculation step calculates an extra price for a charging electric energy of said first vehicle and an extra price for a charging electric energy of said second vehicle, in respective manners different from each other.

16. The price calculation method according to claim 14, wherein
said information about said vehicle is at least one of information about a travel distance of said vehicle and information about an electric energy consumed by said vehicle, and
said extra price calculation step calculates said extra price in a manner that said extra price is higher as said travel distance is longer or as said consumed electric energy is larger.

17. The price calculation method according to claim 13, further comprising the step of generating data for separately outputting said basic usage price and said extra price.

18. A price calculation method performed by a price calculation device for calculating a price for electric power supplied to a power storage device for driving a vehicle, comprising the steps of:
calculating an electric energy supplied to said power storage device;
acquiring information for identifying whether the vehicle supplied with electric power is a vehicle traveling with only the electric power with which said power storage device is charged, or a vehicle traveling with an energy other than said electric power with which said power storage device is charged, in addition to said electric power with which said power storage device is charged; and
calculating an extra price separate from a basic usage price for said electric energy, based on said electric energy and said acquired information.

19. An information output method performed by an information output device for a vehicle supplied with electric power from a power supply external to the vehicle, comprising the steps of:
calculating at least one of information about a travel distance of said vehicle, information about an electric energy consumed by said vehicle, and information about an electric energy which is supplied from the power supply external to said vehicle and with which said vehicle is charged; and
outputting said calculated information to an outside of said vehicle.
